# EUROPÄISCHE PATENTSCHRIFT

(11) **EP 4 222 360 B1**
(45) Veröffentlichungstag und Bekanntmachung des Hinweises auf die Patenterteilung: **31.07.2024**
(21) Anmeldenummer: 21777980.0
(22) Anmeldetag: 13.09.2021
(51) Int. Cl.: F02B 23/08, F02F 3/28, F02M 35/10, F02F 1/42, F02F 3/24, F02F 3/26

(54) **OTTOMOTORISCHE BRENNKRAFTMASCHINE MIT TUMBLEBASIERTEM GAS-BRENNVERFAHREN**
PETROL INTERNAL COMBUSTION ENGINE WITH TUMBLE-BASED GAS COMBUSTION METHOD
MOTEUR À COMBUSTION INTERNE À ESSENCE AVEC PROCÉDÉ DE COMBUSTION DES GAZ BASÉ SUR UN MOUVEMENT DE TUMBLE

(30) Priorität: 02.10.2020 DE 102020125865
(43) Veröffentlichungstag der Anmeldung: 09.08.2023
(73) Patentinhaber: MAN Truck & Bus SE, 80995 München (DE)
(72) Erfinder: WIEGEL, Marcel, 39649 Gardelegen / OT Sachau (DE); HOFER, Martin, 38118 Braunschweig (DE); LUCAS, Gwendal, 38112 Braunschweig (DE); BARCIELA DIAZ-BLANCO, Bruno, 90489 Nürnberg (DE)
(74) Vertreter: Gulde & Partner
(86) Internationale Anmeldenummer: PCT/EP2021/075057
(87) Internationale Veröffentlichungsnummer: WO 2022/069196

(56) Entgegenhaltungen:
- WO-A1-2013/023858
- CN-A- 111 486 020
- US-B1- 6 267 107

## Beschreibung

Die Erfindung betrifft eine Brennkraftmaschine mit zumindest einem Zylinder, mit einem Kolben im Zylinder, der eine Kolbenmulde aufweist, und mit einem Zylinderkopf, wobei der Zylinderkolben und der Zylinderkopf eine Ober- und eine Unterseite und eine Zylinderwand des Zylinders die seitliche Begrenzung eines Brennraumes zwischen der Ober- und eine Unterseite definieren, wobei im Zylinderkopf eine Zündkerze angeordnet ist, die mittig in den mindestens einen Zylinder ragt.

Aus der Druckschrift DE 10 2005 002 389 A1 ist eine Fahrzeug-Kolben-Brennkraftmaschine mit zumindest einem Zylinder, mit einem Kolben im Zylinder, der eine Mulde aufweist, und mit einem Zylinderkopf, der zu einer dachförmigen Geometrie des Kolbens eine entgegengesetzte Dachform mit einer ersten und einer zweiten Seite aufweist, bekannt. Die Seiten laufen giebelförmig zusammen, wobei der Kolben und der Zylinderkopf eine Ober- und eine Unterseite einer Brennkammer definieren, mit einer Zündeinrichtung, die zumindest annähernd mittig in der Dachform angeordnet ist, und mit zwei Einlassventilen, die in der ersten Seite angeordnet sind, und mit zwei Auslassventilen, die in der zweiten Seite angeordnet sind, wobei sich die Mulde über beide Seiten erstreckt, wobei die Mulde seitlich annähernd senkrecht abfallende Seiten und einen Boden umfasst, und der Kolben mindestens zwei Quetschflächen aufweist, die durch Ventiltaschen für Ventile zumindest teilweise voneinander getrennt sind. In der Druckschrift wird die Tumbleerzeugung erläutert. Die Tumbleerzeugung wird mittels der Kanal- und Ventilgeometrie generiert. Die Druckschrift erläutert im Detail weiter, dass mit fortschreitender Bewegung des Kolbens in Richtung OT ein globaler Tumble-Wirbel aufgrund einer Kantenwirkung in viele kleinere Einzelströmungen zerlegt wird. Dadurch löst sich der Tumble-Wirbel weitestgehend vor Erreichen des OT auf und der Turbulenzgrad im Brennraum ist angestiegen. Das geschieht dadurch, dass die globale Tumblebewegung einer Strömung in einem Brennraum während eines Verdichtungstaktes unter Nutzung von zumindest durch eine Mulde in einem Kolbenboden gebildete Kanten zumindest teilweise in Turbulenz aufgebrochen wird, wobei eine derartig erzielte turbulente Strömung in einen sich verengenden Spalt zwischen einem Kolbendach und Quetschflächen im Kolbenboden strömt und vor Erreichen einer OT-Stellung des Kolbens wieder zurückströmt, wobei eingeströmter Brennstoff in den Spalt mit ein- und zurückströmt und bei einer anschließenden Verbrennung mit umfasst wird.

CN 111486020 A und US 6267107 B1 offenbaren weitere Brennkraftmaschinen mit Tumbleerzeugung.

Der Erfindung liegt die Aufgabe zugrunde, für eine Brennkraftmaschine mit einem spezifischen ausgestalteten Brennraum einen verbesserten Verbrennungsverlauf mit optimierter Ladungsbewegung auszugestalten, bei dem zum Zündzeitpunkt eine turbulente Strömung der Ladung vorliegt.

Ausgangspunkt der Erfindung ist eine Brennkraftmaschine mit zumindest einem Zylinder, mit einem Kolben im Zylinder, der eine Kolbenmulde aufweist, und mit einem Zylinderkopf, wobei der Zylinderkolben und der Zylinderkopf eine Ober- und eine Unterseite und eine Zylinderwand des Zylinders die seitliche Begrenzung eines Brennraumes zwischen der Ober- und einer Unterseite definieren, wobei im Zylinderkopf eine Zündkerze angeordnet ist, die mittig in den mindestens einen Zylinder ragt.

Die Brennkraftmaschine ist erfindungsgemäß dadurch gekennzeichnet, dass ein ebener Zylinderkopfboden als Unterseite des Zylinderkopfes ausgebildet ist und die Kolbenmulde im Zylinderkolben im Übergangsbereich zu einem dem Zylinderkopfboden gegenüberliegenden Muldenrand der Kolbenmulde die geometrische Form einer Ellipse mit einer gegenüber dem Muldenrand vorgebbaren Muldentiefe aufweist, wobei die Bildung einer Tumble-Walze einer dem Brennraum zuzuführenden Ladung vorgesehen ist.

Die Ladung rotiert erfindungsgemäß im Brennraum um eine Tumble-Achse, die quer zu der mittigen Zylinderachse als Hochachse des Zylinders verläuft und die mittige Zylinderachse schneidet.

Die Bildung der Tumble-Walze erfolgt:
a) durch die Vorgabe der Strömungsrichtung der im Ansaugtakt zugeführten Ladung in Richtung des mindestens einen Auslasskanals.

In einer bevorzugten Ausgestaltung ist
a1) eine einlasskanalseitige Ausgestaltung vorgesehen, welche die Strömung der Ladung in vorteilhafter Weise in Richtung des Auslasskanals beeinflusst, indem an der Einlasskanalöffnung des Einlasskanales eine die Einlasskanalöffnung für die Ladung vorzugsweise in Richtung des Auslasskanals freigebende Fase ausgebildet ist.

In einer anderen Ausgestaltung ist
a2) eine weitere einlasskanalseitige Ausgestaltung vorgesehen, welche die Strömung der Ladung in vorteilhafter Weise in Richtung des Auslasskanals beeinflusst, indem der Einlasskanal an sich in Richtung des Auslasskanals ausgerichtet ist.

Zudem ist in einer bevorzugten Ausgestaltung vorgesehen, dass die Tumble-Walze durch eine Ausrichtung der elliptischen Mulde gegenüber dem mindestens einen Einlasskanal und gegenüber dem mindestens einen Auslasskanal im Zylinderkopf in vorteilhafter Weise unterstützt wird, wie in der Beschreibung näher erläutert ist. Es ist erfindungsgemäß vorgesehen, dass die Hauptachse der Ellipse der Kolbenmulde parallel zu der durch die Strömungsrichtung der Ladung in den Brennraum gebildeten Lage der Tumble-Achse der Tumble-Walze angeordnet ist.

Weitere bevorzugte Ausgestaltungen der Brennkraftmaschine sind in den abhängigen Ansprüchen formuliert und in der Beschreibung erläutert.

Es wird somit ein Brennverfahren einer Brennkraftmaschine mit mindestens einem der Merkmale der Ansprüche offenbart, bei dem eine Tumblebewegung einer während eines Ansaugtaktes in einen Brennraum eintretenden Strömung einer Ladung und damit die Bildung einer Tumble-Walze als Ladungsbewegung in dem Brennraum durch die Vorgabe der Strömungsrichtung der Ladung in Richtung des mindestens einen Auslasskanals generiert/erzeugt wird.

Durch die einlasskanalseitigen Ausgestaltungen a) ist es möglich, das Brennverfahren zu optimieren, indem a1) an der Einlasskanalöffnung des Einlasskanales eine die Einlasskanalöffnung für die Ladung vorzugsweise in Richtung des Auslasskanals freigebende Fase ausgebildet und/oder a2) der Einlasskanal an sich in Richtung des Auslasskanals ausgerichtet ist.

Durch die Ausrichtung der elliptischen Mulde b) gegenüber dem mindestens einen Einlasskanal und gegenüber dem mindestens einen Auslasskanal im Zylinderkopf ist es ferner möglich, das Brennverfahren zu optimieren, indem die Hauptachse der Ellipse der Kolbenmulde parallel zu der durch die Strömungsrichtung der Ladung in den Brennraum gebildeten Lage der Tumble-Achse der Tumble-Walze angeordnet ist.

Durch eine derart ausgebildete Tumble-Walze wird im Kompressionstakt erreicht, dass der Beginn des Aufbruchs der Tumble-Walze, um die gewünschte Turbulenz zu erreichen, zwischen dem als Brennraumdach eben ausgebildeten Zylinderkopfboden als Unterseite des Zylinderkopfes und der flachen elliptischen Kolbenmulde bei einer vorgebbaren Position des Zylinderkolbens innerhalb des Zylinders beginnt. Die optimale Position, in der in Abhängigkeit der erfindungsgemäß ausgebildeten Tumble-Walze ein Beginn des Aufbruchs der Tumble-Walze erreicht wird, liegt bei einer Kurbelwinkeldifferenz des Zylinderkolbens zwischen 70° bis 50°, bevorzugt 60° vor Zünd-OT, wobei die erfindungsgemäßen Maßnahmen zur Ausgestaltung der Tumble-Walze und der Beeinflussung der Ladungsbewegung nachfolgend detailliert erläutert werden.

Die Erfindung wird nachfolgend anhand der zugehörigen Zeichnungen erläutert. Es zeigen:
- Figur 1: eine prinzipielle Darstellung einer Tumble-Ladungsbewegung um eine quer zur Zylinderachse des Zylinders der Brennkraftmaschine verlaufende Tumble-Achse nach dem Stand der Technik;
- Figur 2: eine prinzipielle Darstellung einer Drall-Ladungsbewegung um die Zylinderachse eines Zylinders einer Brennkraftmaschine nach dem Stand der Technik;
- Figur 3: eine perspektivische Ansicht einer Kolbenmulde eines Kolbens nach dem Stand der Technik;
- Figur 4: eine Draufsicht auf einen Zylinder mit vorgelagerten Ventilkanälen in dem auf dem Zylinder angeordneten Zylinderkopf mit Angabe einer Schnittlinie A-A durch die Mittelpunkte eines Einlasskanales und eines Auslasskanales;
- Figur 5: den Schnitt A-A gemäß Figur 4 durch den Zylinderkopf, der brennraumseitig eine gerade Fläche aufweist und somit eine gerade Brennraumdachfläche bildet;
- Figur 6: einen Einlasskanal in einer bildhaften Darstellung mit einer Durchführung in der Art eines Ventilstutzens für ein orthogonal zu der Brennraumdachfläche bewegliches Einlassventil, dessen Ventilteller im Einbauzustand parallel zu der Brennraumdachfläche angeordnet ist;
- Figur 7: eine perspektivische Darstellung des erfindungsgemäßen Kolbens mit seiner Kolbenmulde;
- Figur 8: eine schematische Schnittdarstellung eines Brennraumes in einem Zylinder der Brennkraftmaschine zwischen Brennraumdach und Kolbenmulde des Zylinderkolbens;
- Figur 9: eine perspektivische vergrößerte Darstellung ausschließlich der Kolbenmulde gemäß Figur 7;
- Figur 10: eine schematische Schnittdarstellung eines Brennraumes in einem Zylinder der Brennkraftmaschine zwischen Brennraumdach und Kolbenmulde des Zylinderkolbens, jedoch zusätzlich mit Darstellung der erzeugten Tumble-Ladungsbewegung im Brennraum durch Veränderung der Kanal- und Ventilgeometrie sowie des Brennraumdaches und der Muldengeometrie des Zylinderkolbens und
- Figur 11: ein Diagramm der turbulenten kinetische Energie über dem Kurbelwinkel einer Kurbelwelle der Brennkraftmaschine.

Die Ladungsbewegung ist sowohl für Otto- als auch Dieselmotoren ein Parameter, der die Verbrennung wesentlich beeinflusst.

Grundsätzlich wird bei der Ladungsbewegung zwischen einem Drall D und einem Tumble T unterschieden.

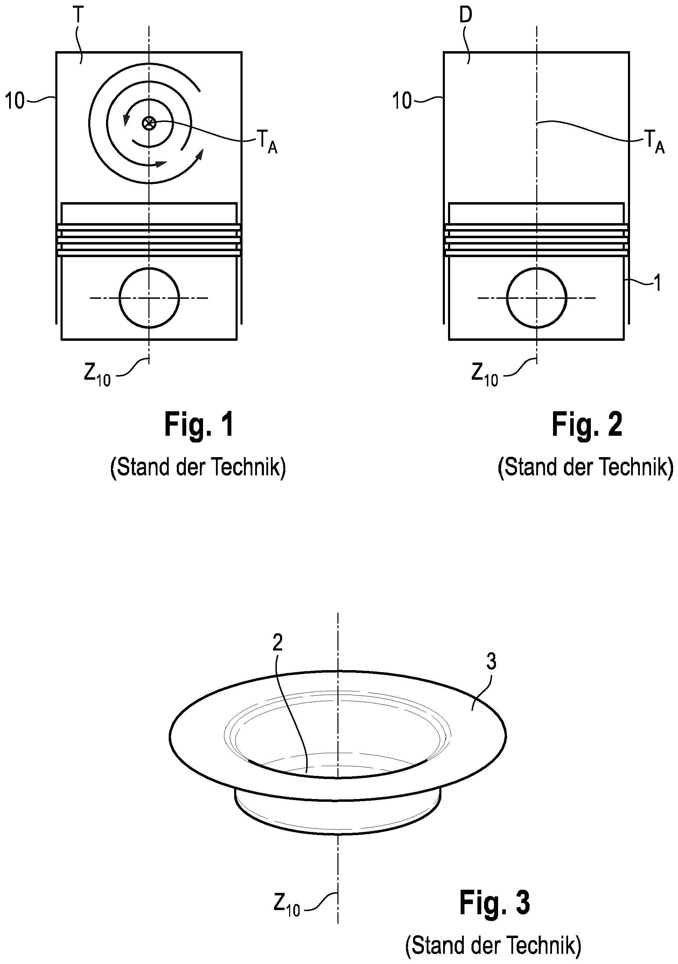

In Figur 1 ist eine Ladungsbewegung in der Art eines Tumble T dargestellt, einem Drall um eine Tumble-Achse T_{A} (in die Blattebene hinein), die quer zu der Zylinderachse Z₁₀ verläuft. Die Zylinderachse Z₁₀ verläuft in Längserstreckung eines Zylinders 10, wobei ein Hubkolben 1 ebenfalls in Längserstreckung des Zylinders 10 auf und ab bewegt wird.

Eine Ladungsbewegung in einem Drall D ist in Figur 2 dargestellt. Bei dem Drall D wird eine Ladungsbewegung um die Zylinderachse Z₁₀ des Zylinders 10 erzeugt.

Eine von vielen bekannten Kolbengeometrien einer Mulde 2 eines Kolbens 100 nach dem Stand der Technik, welche die Ladungsbewegung in einem Brennraum B in hohem Maße beeinflusst, ist in einer perspektivischen Ansicht in Figur 3 gezeigt.

Der Kolben 100 weist eine herkömmliche Kolbenmulde 2 auf, die umfangsseitig von einem Muldenrand 3 umgeben ist. Der Muldenrand 3 ist gemäß Figur 3 im Wesentlichen orthogonal zu der Zylinderachse Z₁₀ des Zylinders 10 ausgebildet und bildet in einer gedachten horizontalen Ebene einen zu der Zylinderachse Z₁₀ relativ breiten Muldenrand.

Gemäß der in der Beschreibungseinleitung zum Stand der Technik bereits erwähnten Druckschrift DE 10 2005 002 389 A1 wird eine Brennkraftmaschine mit zumindest einem Zylinder erläutert, mit einem Kolben 1 im Zylinder, der eine Mulde 2 aufweist, und mit einem Zylinderkopf, der zu einer dachförmigen Geometrie des Kolbens 1 eine entgegengesetzte Dachform mit einer ersten und einer zweiten Seite aufweist, die giebelförmig zusammenlaufen, wobei der Kolben 1 und der Zylinderkopf eine Ober- und eine Unterseite einer Brennkammer definieren, mit einer Zündeinrichtung, die zumindest annähernd mittig in der Dachform angeordnet ist, und mit zwei Einlassventilen, die in der ersten Seite angeordnet sind, und mit zwei Auslassventilen, die in der zweiten Seite angeordnet sind, wobei sich die Mulde 2 über beide Seiten erstreckt, wobei die Mulde 2 seitlich annähernd senkrecht abfallende Seiten und einen Boden umfasst und der Kolben mindestens zwei Quetschflächen aufweist, die durch Ventiltaschen für Ventile zumindest teilweise voneinander getrennt sind. Der zugehörige Kolben weist eine dachförmige Geometrie mit einer Giebelkante auf. An den Giebelkanten 3 bricht der Tumble-Wirbel auf und erhöht dadurch seinen Turbulenzgrad. Vorgesehen ist, dass mit fortschreitender Bewegung des Kolbens in Richtung OT ein globaler Tumble-Wirbel aufgrund der Kantenwirkung des Kolbens in viele kleinere Einzelströmungen zerlegt wird. Dadurch löst sich der Tumble-Wirbel weitestgehend vor Erreichen des OT auf und der Turbulenzgrad im Brennraum ist angestiegen. Die Tumbleerzeugung wird gemäß der Beschreibung der Druckschrift DE 10 2005 002 389 A1 zusammengefasst mittels der Kanal- und Ventilgeometrie generiert. Zwischen einem Einströmkanal und einem Ventil ist ein Winkel α definiert, der derart ausgelegt ist, dass das einströmende Gas tangential in den Brennraum einströmt und an einer gegenüberliegenden Brennraumwand abgelenkt wird, wodurch die Tumblebewegung entsteht.

Die erfindungsgemäße Vorgehensweise zur Erzeugung dieser Ladungsbewegung und die strukturelle Ausgestaltung des Brennraumes des nachfolgend erläuterten "Tumblebasierten CNG-Brennverfahrens" wird auf andere Weise als bisher durch die Kanal- und Ventilgeometrie und darüber hinaus durch weitere Ausgestaltungen strukturiert und verfahrenstechnisch generiert, wodurch sich das "Tumblebasierte Gas(CNG)-Brennverfahren" und die zugehörige Brennkraftmaschine zur Ausführung des Verfahrens vom Stand der Technik unterscheidet, wie nachfolgend erläutert wird.

Die Erfindung beginnt damit, dass gemäß der gestellten Aufgabe der Erfindung davon ausgegangen wird, dass ein brennraumdachseitiger Zylinderkopf 11, der mindestens einem Zylinder 10 zugeordnet ist, mindestens ein Einlassventil EV aufweist, dessen Schaft entlang der Zylinderlängsachse Z₁₀ des Zylinders 10 und dessen Einlassventilteller EV.1 gegenüber dem Brennraumdach des Brennraumes B, das durch die Unterseite des Zylinderkopfes 11 gebildet wird, orthogonal der Zylinderlängsachse Z₁₀ angeordnet ist.

Mit anderen Worten, der Einlassventilteller EV.1 ist in der Einbaulage parallel zu einem Zylinderkopfboden 11A angeordnet, der das Brennraumdach bildet. Der Schaft des Einlassventils EV durchgreift im Zusammenbauzustand entsprechend den Zylinderkopf 11.

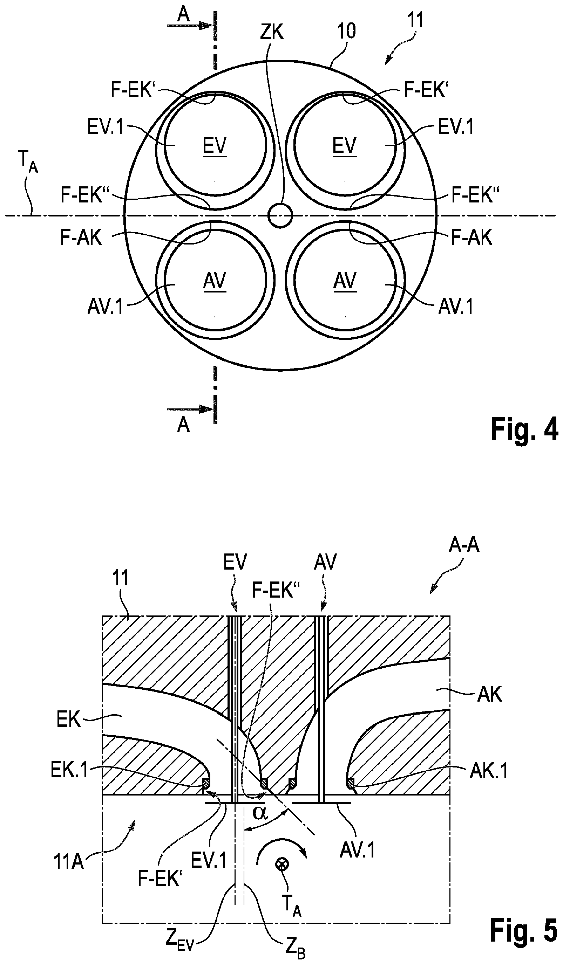

Die Figur 4 zeigt eine Draufsicht auf einen Zylinder 10 mit vorgelagerten Ventilkanälen in dem auf dem Zylinder 10 angeordneten Zylinderkopf 11 mit Angabe einer Schnittlinie A-A, die durch Mittelpunkte eines Einlasskanales EK und eines Auslasskanales AK verläuft.

Die ottomotorische Gas-Brennkraftmaschine ist im Ausführungsbeispiel als 4-Takt-Hubkolben-Brennkraftmaschine ausgebildet und weist mehrere Zylinder 10 auf. In der Regel weist die Brennkraftmaschine einen einzigen Zylinderkopf 11 mit der entsprechenden Ausgestaltung für mehrere Zylinder 10 auf. Bei einer ottomotorischen Gas-Brennkraftmaschine mit mehr als einem Einlassventil EV wird der Ansaugwiderstand verringert. Bei mehr als einem Auslassventil AV wird der Abgasgegendruck verringert. Eine ottomotorische Gas-Brennkraftmaschine mit mehreren Ein- und Auslassventilen EV, AV gemäß dem gewählten Ausführungsbeispiel hat daher einen schnelleren Gasaustausch und eine bessere Zylinderfüllung. Die Brennkraftmaschine erreicht damit ein höheres Drehmoment.

Jedem Zylinder 10 ist eine Zündkerze ZK zugeordnet. Gemäß Figur 4 ist beispielhaft ein Zylinder 10 dargestellt, dem zwei Einlasskanäle EK und zwei Einlassventile EV und zwei Auslasskanäle AK und zwei Auslassventile AV zugeordnet sind, wobei die Einlassventile EV und die Auslassventile AV parallel zu dem ebenen Zylinderkopfboden 11A im Bereich des größten Umfangs ihrer Einlassventilteller EV.1 geschnitten sind, so dass die zugehörigen Schnittlinien mit den in Figur 4 verwendeten Bezugszeichen EV.1 und AV.1 die Einlassventilteller EV.1 und Auslassventilteller AV.1 verdeutlichen. Die Zündkerze ZK ist bezüglich des Zylinders 10 mittig auf der Zylinderlängsachse Z₁₀ in dem Zylinderkopf 11 angeordnet, wobei vorgesehen ist, dass die Zündkerze ZK bezüglich der Zylinderlängsachse Z₁₀ gerade ausgerichtet ist.

Ausgangspunkt der Erfindung sind somit ottomotorische Gas(CNG)-Brennkraftmaschinen, die insbesondere im Nutzfahrzeugbereich aufgrund der geringen Stückzahlen häufig Derivate von Dieselmotorkonstruktionen sind, bei denen der Zylinderkopf im Wesentlichen - auf die Ausrichtung des Schaftes der Einlassventile und Auslassventile bezogen - senkrecht stehende Einlassventile und Auslassventile aufweist, wie zuvor anhand der Figur 4 erläutert ist.

Die zugehörigen Einlass- und Auslasskanäle EK, AK sind derart ausgebildet, dass mittels der senkrecht stehenden Ventile EV, AV zumeist drallbasierte Brennverfahren realisiert werden. Um einen guten Wirkungsgrad der Brennkraftmaschine zu erzielen, ist eine schnelle Verbrennung im Bereich des oberen Totpunkts OT des Zylinderkolbens 1 notwendig. Die Brenngeschwindigkeit hängt dabei unter anderem vom Strömungsfeld im Brennraum B und insbesondere von der Turbulenzintensität ab. Drallbasierte Verfahren haben den Nachteil, dass zum Zündzeitpunkt wenig Turbulenz vorliegt. Ausgangspunkt der nachfolgend vorgestellten technischen Lösung ist die Umsetzung eines "Tumbiebasierten Gasbrennverfahrens", wobei insbesondere für den Nutzfahrzeugbereich die oben beschriebenen senkrecht stehenden Einlassventile EV und Auslassventile AV vorgesehen sind. Diese andere Art der Ladungsbewegung mit einem im Brennraum B erzeugten Tumble T führt zum Zündzeitpunkt in vorteilhafter Weise zu einem Anstieg der Turbulenz in der Nähe des oberen Totpunkts OT. Unterstützt wird dieses Brennverfahren üblicherweise durch einen Dachbrennraum mit schräg stehenden Ventilen, wie es beispielsweise in der Druckschrift DE 10 2005 002 389 A1 erläutert ist, die vorschlägt, dass der Zylinderkopf eine zu einer dachförmigen Geometrie des Kolbens entgegengesetzte Dachform mit einer ersten und einer zweiten Seite aufweist, die giebelförmig zusammenlaufen. Derartige (Um-)Konstruktionen sind im Nutzfahrzeugbereich aufgrund des erhöhten Aufwands bei niedrigerer Stückzahl als im PKW derzeit nicht vorstellbar.

Vorgesehen ist somit die Umsetzung eines Tumble-Brennverfahrens für eine Gas(CNG)-Brennkraftmaschine mit in einem Zylinderkopf 11 senkrecht stehenden Ventilen, wobei das Brennraumdach des Brennraums B beziehungsweise der Zylinderkopfboden 11A (vergleiche Figur 5) - dieseltypisch - gerade ausgebildet ist.

Durch die erfindungsgemäßen Ausgestaltungen wird dafür gesorgt, dass trotz des geraden Zylinderkopfbodens 11A ein optimiertes Tumble-Brennverfahren für eine Gas(CNG)-Brennkraftmaschine realisiert werden kann.

Mit anderen Worten, während der Brennraum bei PKW-Ottomotoren überwiegend durch die Dachgeometrie bestimmt ist, wird der Brennraum B beziehungsweise die Ladungsbewegung im Brennraum B aufgrund des flachen geraden Zylinderkopfbodens 11A des Zylinderkopfes 11 durch andere erfindungsgemäße Ausgestaltungen definiert, wie nachfolgend näher erläutert wird.

### a1) Erste einlasskanalseitige Ausgestaltung - betrifft die Ausrichtung der Tumble-Fasen an den Einlasskanälen EK zur Erzeugung einer Tumbleströmung im Brennraum B:

Aus der Druckschrift WO 2013/023858 A1 ist es bekannt ist, dass die Tumble-Fasen vor allem bei niedrigem Ventilhub, also kurz nach dem Öffnen und kurz vor dem Schließen des Einlassventils EV, wenn die Strömung durch das Einlassventil EV zwangsweise an die Fase beziehungsweise die Anfasung des Einlasskanals EK geführt wird, die im Brennraum ausgebildete Ladungsbewegung beeinflussen. Bei großem Ventilhub verläuft die Abströmung vom Einlasskanal EK primär längs der Einlassventilachse und wird von der Anfasung kaum beeinflusst. Die Anfasung führt zu einer deutlichen Verstärkung der Tumbleströmung im Zylinder 10. Die Effizienz dieser Maßnahme ist gut, das heißt, die Ladungsbewegung wird deutlich erhöht, ohne dass der Luftaufwand in unzulässiger Weise beeinträchtigt wird. Die Anfasung kann in vorteilhafter Weise in die Serienfertigung eingeführt werden, ohne dass der Zylinderkopf 11 anderweitig umkonstruiert werden muss. Die exzentrische Anfasung kann somit in vorteilhafter Weise im Prinzip fertigungskostenneutral umgesetzt werden. Insgesamt ergibt sich somit für eine Gas(CNG)-Brennkraftmaschine ein mit erhöhtem Wirkungsgrad verbessertes Brennverfahren. Das Maximum wird dadurch erreicht, wenn die Symmetrieachse der Fase exzentrisch und/oder angestellt zur Mittelachse des Ventilsitzes angeordnet ist. Im Gegensatz zur exzentrischen Anordnung wird durch die Anstellung der Symmetrieachse erreicht, dass ein Anstellwinkel der Fasenfläche relativ zur Mittelachse über den Umfang des Einlasskanals EK variiert. Die exzentrische Anordnung und die Anstellung können selbstverständlich alternativ oder kombiniert vorgesehen werden.

Die Ausbildung der Fase kann demnach bestimmt sein durch ihren Flankenwinkel, das heißt den Kegelwinkel α eines exzentrisch angesetzten Fräswerkzeugs, und/oder durch ihre Anstellung, das heißt den Anstellwinkel zwischen der Achse des Fräswerkzeugs und der Flächennormalen des Zylinderkopfbodens 11A. Durch beide Maßnahmen kann eine zur Mittelachse unsymmetrische Fase mit der gewünschten Ausrichtung erzeugt werden. Der Kegelwinkel α des exzentrisch angesetzten Fräswerkzeugs und/oder der Anstellwinkel β des Fräswerkzeugs werden so gewählt, dass eine effiziente Strömungsbeeinflussung erzielt wird.

Die Fase wird dabei derart platziert, dass ein Abstand a zu einem Durchmesser beziehungsweise zu einer Zylinderwand größer oder gleich Null ist, das heißt >= 0 ist. Dabei ist der Durchmesser der Zylinderwand gemeint, der den Teil des Zylinderkopfbodens 11A nach oben begrenzt.

Vorgesehen ist gemäß der WO 2013/023858 A1 bisher, dass ist die Ausrichtung der Tumble-Fasen derart erfolgt, dass die Strömungsablenkung in Richtung der den beiden Einlassventilen EV nächstgelegenen Zylinderwand zielt. Somit wird einerseits im Zusammenspiel mit der Krümmung der Zylinderwand eine Tumbleströmung generiert, wobei ferner ein Abstand der Tumble-Fase zur Zylinderwand gewährleistet wird. Durch die angegebenen Winkel wird die Tumbleströmung beeinflusst, da die Strömungsablenkung in Richtung der gemeinsamen, den beiden Einlassventilen nächstgelegenen Zylinderwand erfolgt. Zudem laufen beide Strömungen im Bereich der nächstgelegenen Zylinderwand aufeinander zu und werden in günstiger Weise nach unten abgelenkt, so dass eine Tumblebewegung eingeleitet wird.

Gemäß der Erfindung erfolgt die Ausrichtung der Tumble-Fase F-EK; F-EK', F-EK" der Einlasskanäle EK (vergleiche Figuren 4 und 5 in einer Zusammenschau) derart, dass die Strömung in Richtung des oder der Auslassventile AV gelenkt beziehungsweise abgelenkt wird. Die Erzeugung der Tumble-Fase F-EK kann nach dem beschriebenen bekannten Prinzip erfolgen, wobei die Tumble-Fasen F-EK; F-EK', F-EK" - vom Stand der Technik abweichend - geometrisch, wie folgt, ausgebildet werden.

Die erfindungsgemäße Tumble-Fase F-EK (Positionen: F-EK', F-EK") ist unterhalb des Ventilsitzrings EK.1 (stromab des Ventilsitzrings EK.1) endseitig des Einlasskanales ausgebildet. Die Tumble-Fase F-EK ist gegenüber der Einlassventilachse Z_{EV} unsymmetrisch ausgebildet.

Zur Erläuterung der Erfindung ist ein gegenüber einer Werkzeugbearbeitungsachse ZB gebildeter Flankenwinkel α der Einlasskanalöffnung in der Position F-EK', die der Auslasskanalöffnung am entferntesten liegt, definiert.

Definiert ist ferner der gegenüber der Werkzeugbearbeitungsachse ZB (die parallel zu der Einlassventilachse ZEV verläuft) gebildete Flankenwinkel α der Einlasskanalöffnung der Fase F-EK in der Position F-EK", welcher der Auslasskanalöffnung am nächsten liegt.

Die Positionen F-EK' und F-EK" der Fase F-EK liegen sich auf einem Kreis der jeweiligen kreisrunden zylindrischen Einlasskanalöffnungen radial gegenüber, wonach zwei Fasenbereiche gebildet werden, die jeweils in vorgebbaren Kreissektoren, die gemeinsam 360° ergeben, angeordnet sind.

Die Sektormitte einer der Kreissektoren ist in der Position F-EK" auf den jeweiligen Mittelpunkt der Auslasskanalöffnungen der jeweils benachbart angeordneten Auslassventile AV gerichtet.

Die Sektormitte des jeweils anderen Kreissektors ist auf die Position F-EK' der Fase F-EK gerichtet, die der Position F-EK" auf dem Kreis der jeweiligen kreisrunden zylindrischen Einlasskanalöffnungen radial gegenüber liegt.

Durch die Anwendung eines bevorzugt kegelstumpfförmigen Fräswerkzeuges mit einem vorgebbaren Kegelwinkel wird der entsprechend korrespondierende Flankenwinkel α der Fase F-EK erzeugt, wobei vorgesehen ist, dass der Flankenwinkel α in dem Kreissektor, in dem die Position F-EK' der Fase F-EK liegt, gleich 0° beträgt. Mit anderen Worten, der Flankenwinkel α der Einlasskanalöffnung in der Position F-EK', die der Auslasskanalöffnung des Auslasskanals AK am entferntesten liegt, und der zugehörige Kreissektor weisen keine Fase F-EK auf.

Die dort eintretende Strömung wird somit in vorteilhafter Weise in diesem Bereich hinsichtlich ihres Strömungsbildes derart beeinflusst, dass eine größere Ladungsmenge über denjenigen Kreissektor der Einlasskanalöffnung strömt und dahin umgelenkt wird, der mit der Fase F-EK mit einem Flankenwinkel α, der vorzugsweise zwischen 75° und 45°, bevorzugt 60°, beträgt, versehen ist.

Durch die Anwendung des bevorzugt kegelstumpfförmigen Bearbeitungswerkzeuges, insbesondere Fräswerkzeuges mit dem vorgebbaren Kegelwinkel, wird der entsprechende Flankenwinkel α der Fase F-EK in dem anderen Kreissektor erzeugt, in dem die Position F-EK" der Fase F-EK liegt, wobei der Flankenwinkel α vorzugsweise zwischen 75° und 45°, bevorzugt 60°, beträgt.

Mit anderen Worten, der Flankenwinkel α der Einlasskanalöffnung in der Position F-EK", die der Auslasskanalöffnung des Auslasskanals AK am nächsten liegt, beziehungsweise der zugehörige Kreissektor weist nach der Bearbeitung eine im Wesentlichen sichelförmige Fase F-EK in Richtung der Auslasskanalöffnung des Auslasskanals AK auf, so dass die Strömung zur Ausbildung der Tumble-Walze in vorteilhafter Weise über diesen sichelförmigen Kreissektor geführt wird.

Diese Ausgestaltungen werden erreicht, indem das kegelförmige Werkzeug auf der Werkzeugbearbeitungsachse ZB in die Einlasskanalöffnung geführt wird, die exzentrisch zur Einlassventilachse ZEV verläuft, wobei die Werkzeugbearbeitungsachse ZB, wie in Figur 5 gezeigt ist, parallel zu der Einlassventilachse ZEV verläuft.

Der Flankenwinkel α der Fase F-EK beziehungsweise der korrespondierende Kegelwinkel des kegelförmigen Bearbeitungswerkzeuges beträgt somit gegenüber der exzentrisch zur Einlassventilachse ZEV verlaufenden Werkzeugbearbeitungsachse ZB (vergleiche Figur 5) vorzugsweise zwischen 75° und 45°, bevorzugt 60°.

Je nachdem in welchem Abstand die Werkzeugbearbeitungsachse ZB von der Einlassventilachse ZEV gewählt wird, kann festgelegt werden, ob die im Wesentlichen sichelförmige Fase F-EK, die in Richtung der Auslasskanalöffnung/en des/der Auslasskanals/Auslasskanäle AK angeordnet ist/sind, über den gesamten zugehörigen Kreissektor und nur in einem Teilbereich des Kreissektors ausgebildet ist/sind. Dabei wird sichergestellt, dass die Sektormitte des Kreissektors der Fasen F-EK der jeweiligen Einlasskanalöffnung (bei F-EK"), die auf die Auslasskanalöffnungen der jeweils benachbart angeordneten Auslassventile AV gerichtet sind, stets auf den Mittelpunkt der Auslasskanalöffnungen der jeweils benachbart angeordneten Auslassventile AV ausgerichtet sind.

Durch den Abstand der Werkzeugbearbeitungsachse ZB von der Einlassventilachse ZEV kann die Größe der Kreissektoren und damit die Sichelkontur der Fase F-EK, die - wie erläutert - zu den Auslasskanalöffnungen orientiert/gerichtet angeordnet sind, spezifisch gewählt werden.

Vorgeschlagen wird erfindungsgemäß, dass die Tumble-Fase F-EK mit dem Flankenwinkel α, der zwischen α = 75° und α = 45° liegt und bevorzugt α = 60° beträgt, in dem kreisförmigen Sektor, dessen Sektormitte in dem der Auslasskanalöffnung am nächsten liegenden Position (F-EK") liegt, in einem halbkreisförmigen Sektor = 180° ausgebildet ist. Mit anderen Worten, der radial gegenüberliegende halbkreisförmige Sektor der Fase F-EK der jeweiligen Einlasskanalöffnung weist ebenfalls den Sektorwinkel 180° auf, wobei der zugehörige Flankenwinkel α in diesem gegenüberliegenden Sektor α = 0° beträgt.

Durch radiale Verschiebung der Werkzeugbearbeitungsachse ZB gegenüber der Einlassventilachse ZEV in Richtung des Mittelpunktes der Auslasskanalöffnung in die eine oder andere Richtung wird der kreisförmige Sektor der Einlasskanalöffnung des mindestens einen Einlasskanals EK derart ausgebildet, so dass der Sektor, dessen Sektormitte in dem der Auslasskanalöffnung am nächsten liegenden Position (F-EK") liegt, zwischen </= 210° und >/= 150° liegt, und dabei den Flankenwinkel α, der zwischen α = 75° und α = 45° liegt und bevorzugt α = 60° beträgt, aufweist. Mit anderen Worten, der radial gegenüberliegende kreisförmige Sektor der Einlasskanalöffnung weist dann einen korrespondierenden Sektorwinkel </= 150° und >/= 210° auf, wobei der zugehörige Flankenwinkel α in diesem gegenüberliegenden Sektor α = 0° beträgt.

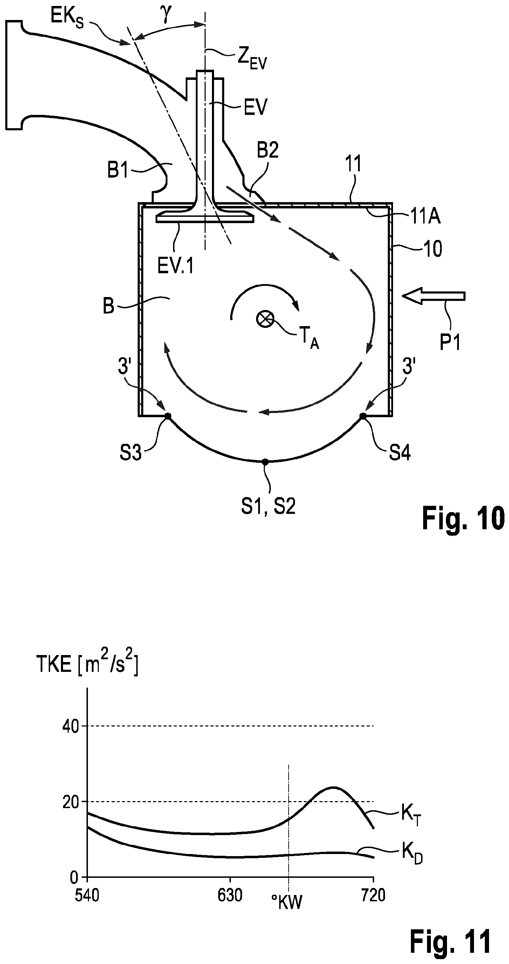

Im Ergebnis wird stets eine Strömungsablenkung in Richtung der Auslassventile AV erzeugt, so dass die Ladungsbewegung (vergleiche vorab Figur 10) in den zentralen Bereich des Brennraumes B hinein erfolgt, so dass die Zylinderwand 12, nachdem die Ladung die Auslassventile AV passiert hat, erst in einem vorgebbaren Abstand in einer von dem Brennraumdach entfernten Position von der Tumble-Walze, die um die Tumble-Achse T_{A} rotiert, getroffen wird.

Es wird erreicht, dass die Tumble-Walze im Brennraum B ausgehend vom Brennraumdach erst bei circa 1/3 des Zylinderdurchmessers auf die Zylinderwand 12 im Bereich der Auslassventile AV trifft.

Diese Position ist in Figur 10 mit dem Pfeil P1 gekennzeichnet. Es wird deutlich, dass die Tumblebewegung nicht von der geometrischen Form des Zylinderkopfbodens 11A abhängt, das heißt, die geometrische Form des Zylinderkopfbodens 11A ist von der erzeugten Tumblebewegung entkoppelt, so dass ohne Nachteile für die zu erzeugende Tumblebewegung ein gerader Zylinderkopfboden 11A aus dem Dieselbereich verwendet werden kann.

Auf den Flankenwinkel α der Fase F-AK der Auslasskanalöffnung wird nicht näher eingegangen. Die Tumble-Fase F-AK der Auslasskanalöffnung ist gegenüber der Einlassventilachse Z_{EV} in herkömmlicher Weise unterhalb des Ventilsitzrings AK.1 (stromab des Ventilsitzrings AK.1) endseitig des Auslasskanales symmetrisch ausgebildet.

### a2) Zweite einlasskanalseitige Ausgestaltung - betrifft die Ausrichtung des mindestens einen Einlasskanales zur Unterstützung der Strömung in Richtung des oder der Auslassventile AV zur Erzeugung einer Tumbleströmung im Brennraum B:

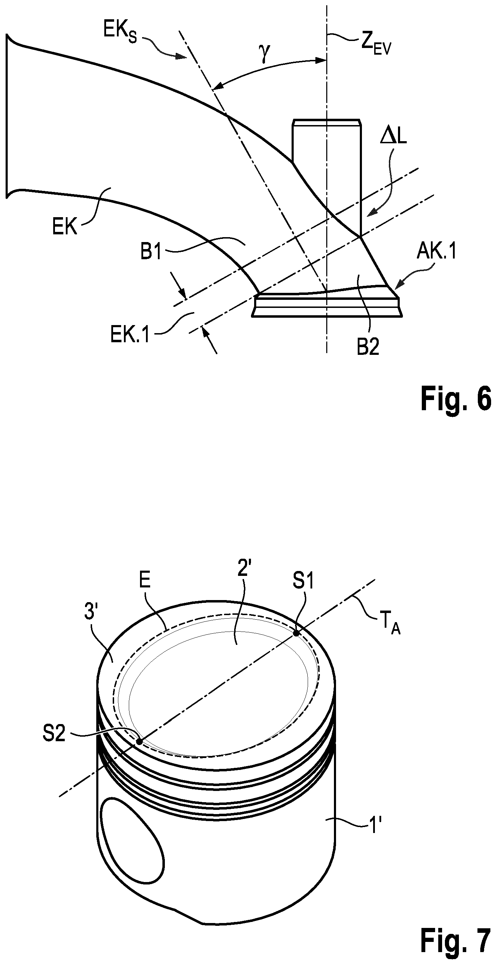

Figur 6 zeigt einen Einlasskanal EK, stellvertretend für die zuvor im Ausführungsbeispiel erläuterten Einlasskanäle EK, in einer bildhaften Darstellung mit einer Durchführung in der Art eines Ventilstutzens für ein orthogonal zu der Brennraumdachfläche des Brennraumdaches bewegliches Einlassventil EV, dessen Einlassventilteller EV.1 im Einbauzustand parallel zu der Brennraumdachfläche angeordnet ist.

Die Einlasskanäle EK werden derart ausgestaltet sein, dass der Hauptimpuls der Strömung in Richtung Auslassseite unterstützt durch die Kanalausgestaltung in den Brennraum B einströmt.

Wie zuvor erläutert soll erreicht werden, dass die Strömung über die Position F-EK" (vergleiche Figur 6) der Fase F-EK, die der Auslasskanalöffnung am nächsten liegt, in den Brennraum B einströmt.

Die Strömungsrichtung lässt sich hauptsächlich durch die Kanalgeometrie in dem Bereich ΔL beeinflussen, der oberhalb des Ventilsitzrings EK.1 (stromauf) des Ventilsitzrings EK.1 liegt. Um eine gerade Seele EKs des Einlasskanals EK zu definieren, wird der Bereich ΔL orthogonal geschnitten, wobei die Seele EKs auf den Mittelpunkt der Einlassventilöffnung ausgerichtet ist.

Gegenüber der Einlassventilachse Z_{EV} kann somit ein Einlasskanalwinkel γ definiert werden, der als Einlasskanalwinkel gegenüber der Einlassventilachse Z_{EV} bezeichnet wird.

Vorgesehen ist, dass zur effektiveren Generierung einer Tumblebewegung der Bereich, der sich unmittelbar vor dem Ventilsitzring EK.1 befindet, einen Einlasskanalwinkel γ zwischen 15° - 45°, bevorzugt > 30°, gegenüber der Einlassventilachse Z_{EV} aufweist. Die Länge ΔL des Bereichs, der sich unmittelbar vor dem Ventilsitzring EK.1 befindet, wird dabei als ½-Ventilsitzringdurchmesser definiert.

### a3) Dritte einlasskanalseitige Ausgestaltung - betrifft die Reduzierung des freien Strömungsquerschnitts des mindestens einen Einlasskanales zur Beeinflussung des Impulses der Strömung in Richtung des oder der Auslassventile AV der erzeugten Tumbleströmung in den Brennraum B:

Der Strömungsquerschnitt des Einlasskanals EK wird in dem zuvor definierten Bereich, der sich unmittelbar vor dem Ventilsitzring EK.1 befindet, reduziert.

Durch die Reduzierung des freien Strömungsquerschnitts im Einlasskanal EK wird der Impuls der Strömung in die Kanalrichtung entsprechend dem gewählten Einlasskanalwinkel γ erhöht.

Es kommt in vorteilhafter Weise zu einer Erhöhung des Tumbleimpulses im Brennraum B.

Dabei ist vorgesehen, dass der freie Querschnitt im Einlasskanal EK wenigstens 20 %, zur weiteren Intensivierung des Impulses besser mehr als 30 %, geringer ist, als der freie Querschnitt direkt im Ventilsitzring EK.1. Die dadurch entstehenden Druck- und Ladungsmengenverluste sind verkraftbar, da insbesondere im Dieselbereich von Nutzfahrzeugen der Brennkraftmaschine zugeordnete Turbolader vorhanden sind.

Durch die Querschnittsreduzierung werden (vergleiche vorab Figur 10) insbesondere Bereiche B1, B2 mit hoher Geschwindigkeit in der Strömung erzeugt. Gemäß den Pfeilen im Brennraum B, welche die Tumble-Walze verdeutlichen sollen, wird die gewünschte Strömungsrichtung der Tumble-Walze angezeigt, wobei die Bereiche der höheren Geschwindigkeit durch die Querschnittsreduzierung erzeugt werden. Dadurch wird der Tumbleimpuls in Richtung der Auslassventile AV über die Position F-EK" (vergleiche Figuren 5 und 6) der Fase F-EK verstärkt, so dass eine geringere Ladungsmenge über die gegenüberliegende Position im Bereich der Position F-EK' (vergleiche Figuren 5 und 6) der Fase F-EK durch die Einlassöffnung der Einlassventile EV strömt.

Es wird somit deutlich, dass die zuvor beschriebenen einlasskanalseitigen Ausgestaltungen a1, a2, a3 einzeln oder in Kombination einen Beitrag leisten, um die Tumbleerzeugung durch die Kanalgeometrie in der beschriebenen Weise in vorteilhafter Weise zu beeinflussen.

Weitere Ausgestaltung betreffen die Mulde 2` des Zylinderkolbens 1', der im Vergleich zu einer herkömmlichen typische Drallmulde 2 gemäß Figur 3 für das Tumble-Brennverfahren durch einen Kolben 1' mit einer flacheren Mulde 2' mit einer geringen Muldentiefe ersetzt wird, um die gerichtete Energie der Ladungsbewegung in Turbulenzenergie zu transferieren, wie nachfolgend anhand der kolbenseitigen Ausgestaltungen erläutert wird. Die Muldentiefe beträgt im tiefsten Punkt maximal 1/5 des Zylinderdurchmessers.

Aufgrund des festgelegten flachen Brennraumdaches durch den dieseltypischen Zylinderkopf 11 wird nahezu die gesamte Brennraumgeometrie des Brennraumes durch die Kolbenform, das heißt die Muldenform der Mulde 2`, definiert. Vorgesehen ist, dass die Mulde 2` die Tumblebewegung (Tumble-Walze) bestmöglich unterstützt.

Eine herkömmliche flache Kolbenmulde bildet mit der Zylinderwand 12 rechteckige Ecken aus, welche auf Ein- und Auslassseite zu verlustbehafteten Rückströmgebieten führen. Eine kreisrunde achsensymmetrisch zur Zylinderachse Z₁₀ ausgebildete Mulde, welche über dem gesamten Umfang einen stumpfen Winkel mit der Zylinderwand 12 bildet, unterstützt den walzenbeziehungsweise zylinderförmigen Tumble T nicht optimal.

Bevorzugt ist daher erfindungsgemäß vorgesehen, dass die Mulde 2' eine elliptische Grundform aufweist.

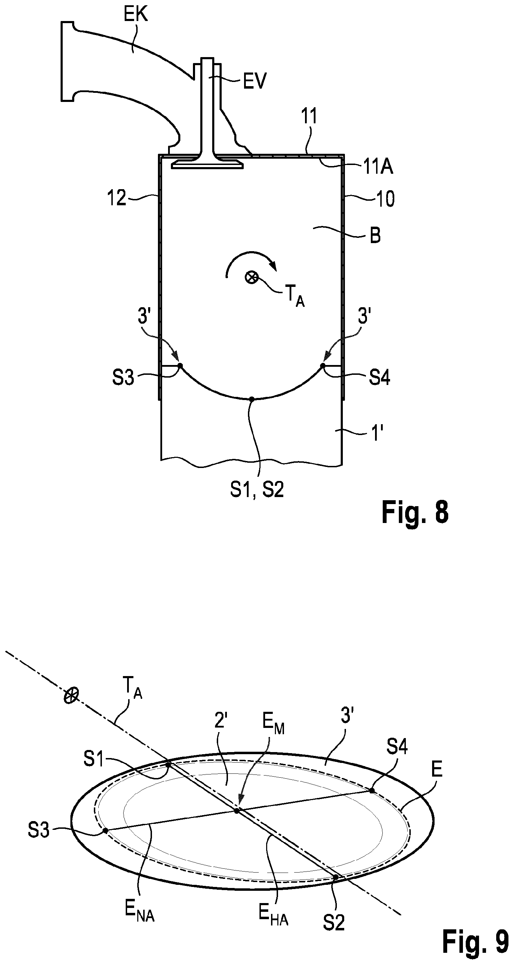

In den Figuren 7, 8 und 9 werden die Ausgestaltungen in einer Zusammenschau der Figuren erläutert, wobei Figur 7 eine perspektivische Darstellung des erfindungsgemäßen Kolbens 1' mit seiner Kolbenmulde 2 zeigt, während Figur 8 eine schematische Schnittdarstellung des Brennraumes B in dem Zylinder 10 der Brennkraftmaschine zwischen Brennraumdach und Kolbenmulde 2` des Zylinderkolbens 1' verdeutlicht. In Figur 9 ist eine perspektivische vergrößerte Darstellung ausschließlich der Kolbenmulde 2' gemäß Figur 7 gezeigt.

### b1) Erste kolbenseitige Ausgestaltung - betrifft die Kolbenmulde 2' als Ellipse E und deren Ausrichtung:

Vorgesehen ist, dass die Mulde 2' eine elliptische Grundform aufweist (vergleiche die gestrichelten Linien in den Figuren 7 und 9), wobei die lange Seite als Hauptachse E_{HA} der Ellipse E (vergleiche Figur 9) im Zusammenbauzustand hinsichtlich der Richtungsorientierung der Tumble-Achse T_{A} (vergleiche insbesondere die Figuren 7 und 9) entspricht.

Die kürzere Nebenachse E_{NA} der Ellipse E (vergleiche Figur 9), welche die Hauptachse E_{HA} der Ellipse E im Mittelpunkt der Mulde 2` schneidet, bildet im Schnittpunkt gemeinsam mit der Hauptachse E_{HA} den Ellipsenmittelpunkt E_{M}.

Vorgesehen ist, dass die Achsenlänge der Hauptachse E_{HA} > 90 % des Zylinderdurchmessers des Zylinders 10 beträgt, während die Achsenlänge der kürzeren Nebenachse E_{NA} zwischen 70 % und 90 % der Achsenlänge der längeren Hauptachse E_{HA} beträgt.

### b2) Zweite kolbenseitige Ausgestaltung - betrifft die Kolbenmulde als flache Mulde 2`:

Die zweite Ausgestaltung besteht darin, dass die Kolbenmulde 2` flach ausgebildet ist. Durch die möglichst flache Mulde 2' wird die Tumble-Walze in kleine Wirbel zerlegt, wie noch erläutert wird.

### b3) Dritte kolbenseitige Ausgestaltung - betrifft die Muldenrandgestaltung der Kolbenmulde 2' als Ellipse E:

Die längere Hauptachse E_{HA} ist (vergleiche die Scheitelpunkte S1, S2 der Hauptachse E_{HA} in Figur 9) im Wesentlichen unmittelbar bis an die Zylinderwand 12 geführt. Das heißt, die Tumble-Walze ist in den Bereichen, in denen die gedachten zylindrischen Walzenenden der Tumble-Walze um die Tumble-Achse T_{A} umlaufen, im Wesentlichen als eine nahezu randlose nur mit einem schmalen Muldenrand 3` versehene Mulde 2' ausgebildet, so dass sich die Tumble-Walze ohne Störungen hinsichtlich des Strömungsprofils, im Wesentlichen verlustfrei ohne Bildung von behafteten Rückströmgebieten, aufbaut.

Die kürzere Nebenachse E_{NA} ist (vergleiche die Scheitelpunkte S3, S4 der Nebenachse E_{NA} in Figur 9) im Wesentlichen bis zu einem im Bereich der Scheitelpunkte S3, S4 ausgebildeten Übergang zwischen der flachen Mulde 2' und dem dort belassenen Muldenrand 3' geführt.

Das heißt, die Tumble-Walze wird in den Bereichen, in denen der gedachte zylindrische Mantel der Tumble-Walze zwischen den Walzenenden um die Tumble-Achse T_{A} läuft, als Kompromiss ausgebildet, so dass die Tumble-Walze ausschließlich im Mantelbereich mit geringen Störungen hinsichtlich des Strömungsprofils mit Strömungsverlusten behaftet ist, wobei der Kern der Tumble-Walze im zentralen Bereich des Brennraumes im Wesentlichen unberührt bleibt. Um das Strömungsprofil günstig zu beeinflussen, wird die nachfolgende Ausgestaltung vorgesehen.

### b4) Vierte kolbenseitige Ausgestaltung - betrifft den Übergang der Kolbenmulde 2` zwischen der Mulde 2' und dem Muldenrand 3' als Ellipse E:

Zur Reduzierung der Verluste ist der Übergang zwischen der elliptischen Mulde 2' und dem Muldenrand 3` verrundet ausgeführt, so dass keine die Ausbildung der Tumble-Walze im Brennraum B störenden Kanten vorhanden sind.

### c) Ausgestaltung des Einlassventiles - betrifft die Beeinflussung der Strömungsrichtung durch das Einlassventil EV selbst:

Aufgrund der oben genannten Ausgestaltungen einzeln oder in Kombination, insbesondere durch die Geometrie der Kolbenmulden 2` des Kolbens 1' und die Strömungsausrichtung mittels des spezifisch ausgestalteten mindestens einen Einlassventiles EV und mittels des spezifisch ausgestalteten zugehörigen Einlasskanales EK, wird die im Ansaugtakt einströmende Ladung bei der Bewegung des Zylinderkolbens 1' von OT nach UT in eine Tumblebewegung versetzt. Alle beschriebenen Ausgestaltungen unterstützen die Ausgestaltung der Tumble-Walze, wobei die Tumble-Achse T_{A} im Wesentlichen in der Mitte des Zylinders 10 zwischen den Einlassventilen EV und den Auslassventilen AV verläuft. Diese Situation ergibt sich auch bei nur einem Einlassventil EV und nur einem Auslassventil AV. Es versteht sich, dass der Kern der sich im Ansaugtakt bildenden Tumble-Walze bei der Bewegung des Zylinderkolbens 1' von OT nach UT von oben nach unten wandert. In der Position UT des Zylinderkolbens 1' liegt somit ein insbesondere durch die elliptische Muldenform der Mulde 2' unterstützter Tumble T im Brennraum B vor, der im Unterschied zum Stand der Technik nicht durch eine giebelförmige Geometrie des Brennraumdaches erzeugt oder unterstützt wird.

Da die Muldenform der Mulde 2` keine Kanten aufweist, liegen somit anders als im Stand der Technik keine Kanten als Strömungshindernisse vor, die ein Aufbrechen der Tumbleströmung bewirken könnten.

Bei dem erfindungsgemäßen Verfahren wird die Tumble-Walze im Kompressionstakt der Brennkraftmaschine bei fortschreitender Bewegung des Zylinderkolbens 1' in Richtung OT komprimiert und zerstört, insbesondere kontinuierlich zusammengequetscht, anschließend zerquetscht und schließlich zerstört. Durch die Zerstörung der Tumble-Walze werden viele kleinere Einzelströmungen erzeugt, so dass schließlich zum Zündzeitpunkt eine starke Turbulenz der Ladung vorliegt. Mit anderen Worten, der Turbulenzgrad im Brennraum steigt an, wie in Figur 11 dargestellt ist.

Die Figur 11 zeigt ein Diagramm der turbulenten kinetische Energie (TKE) [m²/s²] über dem Kurbelwinkel [°KW] einer Kurbelwelle der Brennkraftmaschine.

Eine Drall-Kennlinie K_{D} zur Verdeutlichung der Turbulenz bei vorheriger Erzeugung eines Dralls und eine Tumble-Kennlinie K_{T} zur Verdeutlichung der Turbulenz bei vorheriger Erzeugung eines Tumble T, insbesondere einer Tumble-Walze wie erläutert, sind vergleichsweise dargestellt.

Es ist erkennbar, dass sich nahe des Kompressionsendes ein starker Anstieg der turbulenten kinetischen Energie (TKE) [m²/s²] einstellt. Der Beginn des Anstieg der turbulenten kinetischen Energie (TKE) [m²/s²] liegt in etwa bei Δ°KW zwischen 70° und 50°, insbesondere bei Δ°KW = 60° vor Zünd-OT des Zylinderkolbens 1'.

Diese Position des Zylinderkolbens 1' kurz vor Ende des Kompressionstaktes entspricht in etwa der Position des in Figur 10 angetragenen Pfeiles P1.

Es wird deutlich, dass die Tumble-Walze im Wesentlichen dann zerstört und insbesondere durch die flache Mulde 2` in kleine Wirbel beziehungsweise in kleinere Einzelströmungen zerlegt wird, wenn die Oberseite des Zylinderkolbens 1' in der genannten Position im Kompressionstakt dafür sorgt, dass die Tumble-Walze nicht mehr an die Zylinderwand 12 strömen kann. Daraus wird deutlich, dass die Kombination der erfindungsgemäßen Maßnahmen zur Zerstörung der Tumble-Walze und somit zur Erhöhung des Turbulenzgrades und/oder der Turbulenzintensität von Bedeutung ist, so dass das Brennverfahren durch die erfindungsgemäßen Lösungen im Detail beeinflusst werden kann.

Die während des Ansaugtaktes generierte Tumble-Walze als Tumbleströmung wird am Ende des Kompressionstaktes "zerstört" und in Turbulenz umgewandelt. Die erhöhte Turbulenzintensität beschleunigt die Verbrennung und ermöglicht gute Magerlaufeigenschaften und hohe Abgasrückführraten.

### Bezugszeichenliste

- 1: Zylinderkolben (Stand der Technik)
- 2: Kolbenmulde (Stand der Technik)
- 3: Muldenrand (Stand der Technik)
- 1': Zylinderkolben (gemäß der Erfindung)
- 2': Kolbenmulde (gemäß der Erfindung)
- 3`: Muldenrand (gemäß der Erfindung)
- 10: Zylinder
- 11: Zylinderkopf
- 11A: Zylinderkopfboden
- 12: Zylinderwand
- Z₁₀: Zylinderachse
- T: Tumble
- T_{A}: Tumble-Achse
- D: Drall
- EK: Einlasskanal
- EK.1: Ventilsitzring
- EK_{S}: Seele des Einlasskanals
- γ: Einlasskanalwinkel
- AK: Auslasskanal
- AK.1: Ventilsitzring
- ZK: Zündkerze
- ΔL: Länge
- EV: Einlassventil
- EV.1: Einlassventilteller
- AV: Auslassventil
- AV.1: Auslassventilteller
- Z_{EV}: Einlassventilache
- Z_{B}: Werkzeugbearbeitungsachse
- F-EK: Tumble-Fase
- F-EK': erste Position der Tumble-Fase
- F-EK": zweite Position der Tumble-Fase
- α: Flankenwinkel
- β: Anstellwinkel
- B: Brennraum
- A-A: Schnittlinie
- OT: oberer Totpunkt
- UT: unterer Totpunkt
- P1: Pfeil
- B1: erster Geschwindigkeitsbereich
- B2: zweiter Geschwindigkeitsbereich
- E: Ellipse
- S1: Scheitelpunkt
- S2: Scheitelpunkt
- S3: Scheitelpunkt
- S4: Scheitelpunkt
- E_{HA}: Hauptachse
- E_{NA}: Nebenachse
- E_{M}: Ellipsenmittelpunkt
- TKE: turbulente kinetische Energie
- K_{D}: Drall-Kennlinie
- K_{T}: Tumble-Kennlinie
- CNG: komprimiertes Gas (Compressed Natural Gas)
- KW: Kurbelwinkel
- Δ°KW: Differenz-Kurbelwinkel

## Patentansprüche

1. Brennkraftmaschine mit zumindest einem Zylinder (10), mit einem Kolben (1) im Zylinder (10), der eine Kolbenmulde (2) aufweist, und mit einem Zylinderkopf (11), wobei der Zylinderkolben (1) und der Zylinderkopf (11) eine Ober- und eine Unterseite und eine Zylinderwand (12) des Zylinders (10) die seitliche Begrenzung eines Brennraumes (B) zwischen der Ober- und einer Unterseite definieren, wobei im Zylinderkopf (11) eine Zündkerze (ZK) angeordnet ist, die mittig in den mindestens einen Zylinder (10) ragt, **dadurch gekennzeichnet, dass**
• ein ebener Zylinderkopfboden (11A) als Unterseite des Zylinderkopfes (11) ausgebildet ist und die Kolbenmulde (2`) im Zylinderkolben (1') im Übergangsbereich zu einem dem Zylinderkopfboden (11A) gegenüberliegenden Muldenrand (3`) der Kolbenmulde (2') die geometrische Form einer Ellipse (E) mit einer gegenüber dem Muldenrand (3`) vorgebbaren Muldentiefe aufweist,
• wobei die Bildung einer Tumble-Walze einer dem Brennraum (B) zuzuführenden Ladung, die im Brennraum (B) um eine Tumble-Achse (T_{A}) rotiert, die quer zu der mittigen Zylinderachse (Z₁₀) als Hochachse des Zylinders (10) verläuft und die mittige Zylinderachse (Z₁₀) schneidet, erfolgt,
a) durch die Vorgabe der Strömungsrichtung der im Ansaugtakt zugeführten Ladung in Richtung des mindestens einen Auslasskanals (AK), durch
a1) eine einlasskanalseitige Ausgestaltung in Richtung des Auslasskanals (AK), indem an der Einlasskanalöffnung des Einlasskanales (EK) eine die Einlasskanalöffnung für die Ladung vorzugsweise in Richtung des Auslasskanals (AK) freigebende Fase (F-EK; F-EK', F-EK")) ausgebildet und/oder
a2) der Einlasskanal (EK) an sich in Richtung des Auslasskanals (AK) ausgerichtet ist, und
b) durch eine Ausrichtung der elliptischen Mulde (2') gegenüber dem mindestens einen Einlasskanal (EK) und gegenüber dem mindestens einen Auslasskanal (AK) im Zylinderkopf (11), indem die Hauptachse (E_{HA}) der Ellipse (E) der Kolbenmulde (2') parallel zu der durch die Strömungsrichtung der Ladung in den Brennraum (B) gebildeten Lage der Tumble-Achse (T_{A}) der Tumble-Walze angeordnet ist.

2. Brennkraftmaschine nach Anspruch 1, **dadurch gekennzeichnet, dass** eine Tumble-Fase (F-EK, F-EK") unterhalb eines Ventilsitzrings (EK.1) - stromab des Ventilsitzrings (EK.1) - endseitig des Einlasskanales (EK) gegenüber der Einlassventilachse (Z_{EV}) derart ausgebildet ist, so dass die Tumble-Fase (F-EK) gegenüber einer Werkzeugbearbeitungsachse (Z_{B}), die exzentrisch zur der Einlassventilachse (Z_{EV}) verläuft, in einem durch die Einlasskanalöffnung gebildeten halbkreisförmigen Sektor einen Flankenwinkel (α) aufweist, der zwischen α = 75° und α = 45° liegt und bevorzugt α = 60° beträgt, wobei die Sektormitte des gebildeten kreisförmigen Sektors in der einer Auslasskanalöffnung des mindestens einen Auslasskanals (AK) am nächsten liegenden Position (F-EK") liegt.

3. Brennkraftmaschine nach Anspruch 1, **dadurch gekennzeichnet, dass** die Tumble-Fase (F-EK; F-EK') unterhalb des Ventilsitzrings (EK.1) - stromab des Ventilsitzrings (EK.1) - endseitig des Einlasskanales (EK) gegenüber der Einlassventilachse (Z_{EV}) derart ausgebildet ist, so dass die Tumble-Fase (F-EK) gegenüber der Werkzeugbearbeitungsachse (Z_{B}), die exzentrisch zur der Einlassventilachse (Z_{EV}) verläuft, in einem durch die Einlasskanalöffnung gebildeten kreisförmigen Sektor einen Flankenwinkel (α) aufweist, der α = 0 beträgt, wobei die Sektormitte des gebildeten kreisförmigen Sektors in der eine Auslasskanalöffnung des mindestens einen Auslasskanals (AK) am entferntesten liegenden Position (F-EK') liegt.

4. Brennkraftmaschine nach Anspruch 2, **dadurch gekennzeichnet, dass** der Flankenwinkel (α) der Tumble-Fase (F-EK), der zwischen α = 75° und α = 45° liegt und bevorzugt α = 60° beträgt, in dem kreisförmigen Sektor, dessen Sektormitte in dem der Auslasskanalöffnung am nächsten liegenden Position (F-EK") liegt, in einem halbkreisförmigen Sektor (= 180°) oder in einem kreisförmigen Sektor ausgebildet ist, der zwischen </= 210° und >/= 150° liegt.

5. Brennkraftmaschine nach Anspruch 1, **dadurch gekennzeichnet, dass** eine Seele (EKs) des Einlasskanals (EK) auf den Mittelpunkt der Einlassventilöffnung des Einlasskanals (EK) ausgerichtet ist, wobei die Seele (EKs) gegenüber der Einlassventilachse (Z_{EV}) einen vorgebbaren Einlasskanalwinkel (γ) definiert, wobei der vorgebbare Einlasskanalwinkel (γ) zwischen γ = 15° und γ = 45° liegt und bevorzugt γ > 30° gegenüber der Einlassventilachse (Z_{EV}) beträgt.

6. Brennkraftmaschine nach Anspruch 2 und/oder 3, **dadurch gekennzeichnet, dass** der Einlasskanalwinkel (γ) und/oder der Flankenwinkel (α) der Tumble-Fase (F-EK; F-EK', F-EK") derart ausgerichtet ist/sind, dass die Tumble-Walze im Brennraum (B), ausgehend von dem durch den Zylinderkopfboden (11A) ausgebildeten Brennraumdach, bei circa 1/3 des Zylinderdurchmessers des Zylinders (10) im Bereich des mindestens einen Auslassventils (AV) auf die Zylinderwand (12) trifft.

7. Brennkraftmaschine nach Anspruch 1, **dadurch gekennzeichnet, dass** der freie Querschnitt des Einlasskanals (EK) wenigstens 20 %, bevorzugt mehr als 30 %, kleiner ist, als der freie Querschnitt eines im Wesentlichen am Ende des mindestens einen Einlasskanals (EK) - in Strömungsrichtung gesehen - vor der Fase (F-EK) angeordneten Ventilsitzrings (EK.1).

8. Brennkraftmaschine nach Anspruch 1, **dadurch gekennzeichnet, dass** eine Achsenlänge der Hauptachse (E_{HA}) zwischen den zugehörigen Scheitelpunkten (S1, S2) der Ellipse (E) > 90 % des Zylinderdurchmessers des Zylinders (10) beträgt, während die Achsenlänge der kürzeren Nebenachse (E_{NA}) zwischen den zugehörigen Scheitelpunkten (S3, S4) der Ellipse (E) zwischen 70 % und 90 % der Achsenlänge der längeren Hauptachse (E_{HA}) beträgt.

9. Brennkraftmaschine nach Anspruch 1, **dadurch gekennzeichnet, dass** die Kolbenmulde (2') eine geringe Tiefe aufweist, wobei die Muldentiefe im tiefsten Punkt maximal 1/5 des Zylinderdurchmessers beträgt.

10. Brennkraftmaschine nach Anspruch 1 oder 8, **dadurch gekennzeichnet, dass** die längere Hauptachse (E_{HA}), die zwischen den zugehörigen Scheitelpunkten (S1, S2) der Ellipse (E) ausgebildet ist, jeweils endseitig nahe bis an die Zylinderwand (12) reicht, während die kürzere Nebenachse (E_{NA}), die zwischen den zugehörigen Scheitelpunkten (S3, S4) der Ellipse (E) ausgebildet ist, jeweils endseitig nur bis zu einem Übergang zwischen der flachen Mulde (2') und dem dort belassenen Muldenrand (3') geführt ist.

11. Brennkraftmaschine nach Anspruch 1, **dadurch gekennzeichnet, dass** der Übergang der Kolbenmulde (2`) zwischen der Kolbenmulde (2`) und dem Muldenrand (3`) der Ellipse (E) abgerundet ausgeführt ist.

12. Brennverfahren einer Brennkraftmaschine mit mindestens einem der Merkmale der Ansprüche 1 bis 11, wobei eine Tumblebewegung einer während eines Ansaugtaktes in einen Brennraum (B) eintretenden Strömung einer Ladung und die Bildung einer Tumble-Walze als Ladungsbewegung in dem Brennraum (B) durch die Vorgabe der Strömungsrichtung der Ladung in Richtung des mindestens einen Auslasskanals (AK) durch
a1) eine einlasskanalseitige Ausgestaltung, in dem an der Einlasskanalöffnung des Einlasskanales (EK) eine die Einlasskanalöffnung für die Ladung vorzugsweise in Richtung des Auslasskanals (AK) freigebende Fase (F-EK; F-EK', F-EK")) ausgebildet und/oder
a2) der Einlasskanal (EK) an sich in Richtung des Auslasskanals (AK) ausgerichtet ist, und
b) durch eine Ausrichtung der elliptischen Mulde (2') gegenüber dem mindestens einen Einlasskanal (EK) und gegenüber dem mindestens einen Auslasskanal (AK) im Zylinderkopf (11), beeinflusst wird,
indem die Hauptachse (E_{HA}) der Ellipse (E) der Kolbenmulde (2') parallel zu der durch die Strömungsrichtung der Ladung in den Brennraum (B) gebildeten Lage der Tumble-Achse (T_{A}) der Tumble-Walze angeordnet ist, wobei der Aufbruch der Turbulenz der derart ausgebildeten Tumble-Walze im Kompressionstakt zwischen dem als Brennraumdach ausgebildeten geraden Zylinderkopfboden (11A) als Unterseite des Zylinderkopfes (11) und der flachen Kolbenmulde (2) bei einer vorgebbaren Position des Zylinderkolbens (1') innerhalb des Zylinders (10) bei einer Kurbelwinkeldifferenz (ΔKW°) zwischen 70° bis 50° bevorzugt 60° vor Zünd-OT beginnt.

## Claims

1. An internal combustion engine having at least one cylinder (10), with a piston (1) in the cylinder (10), which piston has a piston bowl (2), and having a cylinder head (11), wherein the cylinder piston (1) and the cylinder head (11) define a top side and a bottom side, and a cylinder wall (12) of the cylinder (10) defines the lateral boundary of a combustion chamber (B) between the top side and a bottom side, wherein a spark plug (ZK) is arranged in the cylinder head (11) and projects centrally into the at least one cylinder (10),
**characterized in that**
· a flat cylinder head base (11A) is configured as the bottom side of the cylinder head (11) and the piston bowl (2') in the cylinder piston (1') in the transition region to a bowl edge (3') of the piston bowl (2') opposite the cylinder head base (11A) has the geometric shape of an ellipse (E) with a bowl depth which can be predefined with respect to the bowl edge (3'),
· wherein the formation of a tumble roller of a charge to be supplied to the combustion chamber (B), which rotates in the combustion chamber (B) about a tumble axis (T_{A}) which runs transversely to the central cylinder axis (Z₁₀) as the vertical axis of the cylinder (10) and intersects the central cylinder axis (Z₁₀), is brought about
a) by the specification of the direction of flow of the charge fed in the intake stroke towards the at least one exhaust port (AK), by
·a1) a design on the intake port side towards the exhaust port (AK), **in that** a chamfer (F-EK; F-EK', F-EK") exposing the intake port opening for the charge preferably towards the exhaust port (AK) is configured at the intake port opening of the intake port (EK) and/or
a2) the intake port (EK) is itself oriented towards the exhaust port (AK), and
b) by an orientation of the elliptically formed bowl (2') opposite the at least one intake port (EK) and opposite the at least one exhaust port (AK) in the cylinder head (11), **in that** the main axis (E_{HA}) of the ellipse (E) of the piston bowl (2') is arranged parallel to the position of the tumble axis (T_{A}) of the tumble roller formed by the direction of flow of the charge into the combustion chamber (B).

2. The internal combustion engine according to Claim 1, **characterized in that** a tumble chamfer (F-EK, F-EK") beneath a valve seat ring (EK.1) - downstream of the valve seat ring (EK.1) - at the end of the intake port (EK) is configured with respect to the intake valve axis (Zεv) in such a way that the tumble chamfer (F-EK) has a flank angle (α) in a semicircular sector formed by the intake port opening, which lies between α = 75° and α = 45° and preferably α = 60°, with respect to a tool machining axis (Z_{B}), which runs eccentrically to the intake valve axis (Zεv), wherein the sector center of the formed circular sector lies in the closest position (F-EK") to an exhaust port opening of the at least one exhaust port (AK).

3. The internal combustion engine according to Claim 1, **characterized in that** the tumble chamfer (F-EK; F-EK') beneath the valve seat ring (EK.1) - downstream of the valve seat ring (EK.1) -- at the end of the intake port (EK) is configured with respect to the intake valve axis (Zεv) in such a way that the tumble chamfer (F-EK) has a flank angle (α) in a circular sector formed by the intake port opening, where α = 0, wherein the sector center of the formed circular sector lies in the furthest away position (F-EK) from an exhaust port opening of the at least one exhaust port (AK), with respect to the tool machining axis (Z_{B}) which runs eccentrically to the intake valve axis (Zεv).

4. The internal combustion engine according to Claim 2, **characterized in that** the flank angle (α) of the tumble chamfer (F-EK), which lies between α = 75° and α = 45° and preferably α = 60°, in the circular sector, the sector center of which lies in the closest position (F-EK") to the exhaust port opening, is configured in a semicircular sector (= 180°) or in a circular sector which lies between </= 210° and >/= 150°.

5. The internal combustion engine according to Claim 1, **characterized in that** a core (EKs) of the intake port (EK) is oriented towards the center point of the intake valve opening of the intake port (EK), wherein the core (EKs) defines an intake port angle (γ) which can be predefined with respect to the intake valve axis (Zεv), wherein the predefinable intake port angle (y) lies between γ = 15° and γ = 45° and preferably γ > 30° with respect to the intake valve axis (Zεv).

6. The internal combustion engine according to Claim 2 and/or 3, **characterized in that** the intake port angle (γ) and/or the flank angle (α) of the tumble chamfer (F-EK; F-EK', F-EK") is/are oriented in such a way that the tumble roller in the combustion chamber (B), starting from the combustion chamber roof configured by the cylinder head base (11A), meets the cylinder wall (12) at approximately 1/3 of the cylinder diameter of the cylinder (10) in the region of the at least one exhaust valve (AV).

7. The internal combustion engine according to Claim 1, **characterized in that** the free cross-section of the intake port (EK) is at least 20%, preferably more than 30%, smaller than the free cross-section of a valve seat ring (EK.1) arranged substantially at the end of the at least one intake port (EK) - viewed in the direction of flow - in front of the chamfer (F-EK).

8. The internal combustion engine according to Claim 1, **characterized in that** an axial length of the main axis (E_{HA}) between the associated vertices (S1, S2) of the ellipse (E) is > 90 % of the cylinder diameter of the cylinder (10), while the axial length of the shorter secondary axis (E_{NA}) between the associated vertices (S3, S4) of the ellipse (E) is between 70% and 90% of the axial length of the longer main axis (EHA).

9. The internal combustion engine according to Claim 1, **characterized in that** the piston bowl (2') has a lower depth, wherein the bowl depth in the lowest point is a maximum of 1/5 of the cylinder diameter.

10. The internal combustion engine according to Claim 1 or 8, **characterized in that** the longer main axis (E_{HA}), which is configured between the associated vertices (S1, S2) of the ellipse (E), extends at each end up close to the cylinder wall (12), while the shorter secondary axis (E_{NA}), which is configured between the associated vertices (S3, S4) of the ellipse (E), stretches at each end only up to a transition between the flat bowl (2') and the bowl edge (3') left there.

11. The internal combustion engine according to Claim 1, **characterized in that** the transition of the piston bowl (2') has a rounded form between the piston bowl (2') and the bowl edge (3') of the ellipse (E).

12. A gas combustion method of an internal combustion engine having at least one of the features of Claims 1 to 11, wherein a tumble movement of a flow of a charge entering a combustion chamber (B) during an intake stroke and the formation of a tumble roller as a charge movement in the combustion chamber (B) is influenced by the specification of the direction of flow of the charge towards the at least one exhaust port (AK) by
a1) a design on the intake port side, in which a chamfer (F-EK; F-EK', F-EK")) exposing the intake port opening for the charge is preferably configured towards the exhaust port (AK) at the intake port opening of the intake port (EK) and/or
a2) the intake port (EK) is itself oriented towards the exhaust port (AK), and
b) by an orientation of the elliptically formed bowl (2') opposite the at least one intake port (EK) and opposite the at least one exhaust port (AK) in the cylinder head (11),
in that the main axis (E_{HA}) of the ellipse (E) of the piston bowl (2') is arranged parallel to the position of the tumble axis (T_{A}) of the tumble roller formed by the direction of flow of the charge into the combustion chamber (B), wherein the breakup of the turbulence of the tumble roller configured in this way in the compression stroke between the straight cylinder head base (11A) configured as a combustion chamber roof as the bottom side of the cylinder head (11) and the flat piston bowl (2) begins at a predefinable position of the cylinder piston (1') within the cylinder (10) at a crank angle difference (ΔKW°) between 70° to 50° preferably 60° prior to ignition TDC.

## Revendications

1. Moteur à combustion interne ayant au moins un cylindre (10), avec un piston (1) dans le cylindre (10) qui présente un évidement de piston (2), et ayant une tête de cylindre (11), où le piston de cylindre (1) et la tête de cylindre (11) définissent une face supérieure et une face inférieure et une paroi de cylindre (12) du cylindre (10) définit la délimitation latérale d'une chambre de combustion (B) entre la face supérieure et une face inférieure, où dans la tête de cylindre (11) est disposée une bougie d'allumage (ZK) qui fait saillie de manière centrale dans l'au moins un cylindre (10),
**caractérisé en ce que**
· un fond de tête de cylindre plat (11A) est conçu sous forme de face inférieure de la tête de cylindre (11) et l'évidement de piston (2') dans le piston de cylindre (1') présente, dans la zone de jonction par rapport à un bord d'évidement (3') de l'évidement de piston (2') opposé au fond de tête de cylindre (11A), la forme géométrique d'une ellipse (E) avec une profondeur d'évidement pré-définissable par rapport au bord d'évidement (3'),
· où la formation d'un cylindre de tourbillon transversal (tumble) d'une charge qui doit être alimentée dans la chambre de combustion (B), laquelle tourne dans la chambre de combustion (B) autour d'un axe de tourbillon transversal (T_{A}), lequel s'étend transversalement à l'axe de cylindre central (Z₁₀) sous forme d'axe en hauteur du cylindre (10) et coupe l'axe de cylindre central (Z₁₀), se fait
a) en indiquant la direction d'écoulement de la charge alimentée dans la course d'admission en direction de l'au moins un canal d'échappement (AK), par
a1) une structure côté canal d'admission en direction du canal d'échappement (AK), dans lequel une phase (F-EK ; F-EK', F-EK")) libérant l'ouverture de canal d'admission pour la charge de préférence en direction du canal d'échappement (AK) est conçu au niveau de l'ouverture de canal d'admission du canal d'admission (EK) et/ou
a2) le canal d'admission (EK) aligné en soi en direction du canal d'échappement (AK), et
b) en orientant l'évidement elliptique (2') vis-à-vis de l'au moins un canal d'admission (EK) et vis-à-vis de l'au moins un canal d'échappement (AK) dans la tête de cylindre (11), en disposant l'axe principal (E_{HA}) de l'ellipse (E) de l'évidement de piston (2') parallèlement à la position de l'axe de tourbillon transversal (T_{A}) du cylindre de tourbillon transversal, laquelle est formée par la direction d'écoulement de la charge dans la chambre de combustion (B).

2. Moteur à combustion interne selon la revendication 1, **caractérisé en ce qu'**un palier de tourbillon transversal (F-EK, F-EK") en-dessous d'une bague de siège de soupape (EK.1) - en aval de la bague de siège de soupape (EK.1) - du côté extrémité du canal d'admission (EK) vis-à-vis de l'axe de canal d'admission (Zεv) est conçu de telle sorte que le palier de tourbillon transversal (F-EK) vis-à-vis d'un axe de traitement d'outil (Z_{B}), lequel s'étend de manière excentrique par rapport à l'axe de canal d'admission (Zεv), présente dans un secteur semi-circulaire formé à travers l'ouverture de canal d'admission un angle de flanc (α) qui est compris entre α = 75° et α = 45° et est de préférence α = 60°,
où le centre de secteur du secteur circulaire formé se trouve dans la position (F-EK") située au plus proche d'une ouverture de canal d'échappement de l'au moins un canal d'échappement (AK).

3. Moteur à combustion interne selon la revendication 1, **caractérisé en ce que** le palier de tourbillon transversal (F-EK ; F-EK') en-dessous de la bague de siège de soupape (EK.1) - en aval de la bague de siège de soupape (EK.1) - du côté extrémité du canal d'admission (EK) vis-à-vis de l'axe de canal d'admission (Zεv) est conçu de telle sorte que le palier de tourbillon transversal (F-EK) vis-à-vis de l'axe de traitement d'outil (Z_{B}), lequel s'étend de manière excentrique par rapport à l'axe de canal d'admission (Zεv), présente dans un secteur circulaire formé à travers l'ouverture de canal d'admission un angle de flanc (α) qui est α = 0, où le centre de secteur du secteur circulaire formé se trouve dans la position (F-EK') située au plus loin d'une ouverture de canal d'échappement de l'au moins un canal d'échappement (AK).

4. Moteur à combustion interne selon la revendication 2, **caractérisé en ce que** l'angle de flanc (α) du palier de tourbillon transversal (F-EK) qui est compris entre α = 75° et α = 45° et est de préférence α = 60°, dans le secteur circulaire dont le centre de secteur se trouve dans la position (F-EK") située au plus près de l'ouverture de canal d'échappement, est conçu dans un secteur semi-circulaire (= 180°) ou dans un secteur circulaire qui est compris entre </= 210° et >/= 150°.

5. Moteur à combustion interne selon la revendication 1, **caractérisé en ce qu'**une âme (EKs) du canal d'admission (EK) est alignée sur le centre de l'ouverture de canal d'admission du canal d'admission (EK), où l'âme (EKs) vis-à-vis de l'axe de canal d'admission (Zεv) définit un angle de canal d'admission prédéfinissable (γ), dans lequel l'angle de canal d'admission prédéfinissable (y) est compris entre γ = 15° et γ = 45° et est de préférence γ > 30° vis-à-vis de l'axe de canal d'admission (Zεv).

6. Moteur à combustion interne selon la revendication 2 et/ou 3, **caractérisé en ce que** l'angle de canal d'admission (γ) et/ou l'angle de flanc (α) du palier de tourbillon transversal (F-EK ; F-EK', F-EK") est/sont aligné(s) de telle sorte que le cylindre de tourbillon transversal dans la chambre de combustion (B),4 partir du toit de chambre de combustion conçu par le fond de tête de cylindre (11A), rencontre la paroi de cylindre (12) à environ 1/3 du diamètre de cylindre du cylindre (10) au niveau de l'au moins une soupape d'échappement (AV).

7. Moteur à combustion interne selon la revendication 1, **caractérisé en ce que** la section transversale libre du canal d'admission (EK) est plus petite d'au moins 20 %, de préférence de plus de 30 %, que la section transversale libre d'une bague de siège de soupape (EK.1) disposée sensiblement à l'extrémité de l'au moins un canal d'admission (EK) - vu dans la direction d'écoulement - en amont du palier (F-E K).

8. Moteur à combustion interne selon la revendication 1, **caractérisé en ce qu'**une longueur d'axe de l'axe principal (E_{HA}) entre les sommets correspondants (S1, S2) de l'ellipse (E) est > 90 % du diamètre de cylindre du cylindre (10), tandis que la longueur d'axe de l'axe auxiliaire plus court (E_{NA}) entre les sommets correspondants (S3, S4) de l'ellipse (E) est comprise entre 70 % et 90 % de la longueur d'axe de l'axe principal plus long (E_{HA}).

9. Moteur à combustion interne selon la revendication 1, **caractérisé en ce que** l'évidement de piston (2') présente une profondeur plus faible, où la profondeur d'évidement au point le plus profond représente au maximum 1/5^{e} du diamètre de cylindre.

10. Moteur à combustion interne selon la revendication 1 ou 8, **caractérisé en ce que** l'axe principal plus long (E_{HA}), qui est conçu entre les sommets correspondants (S1, S2) de l'ellipse (E), s'étend de chaque ses extrémités presque jusqu'à la paroi de cylindre (12), tandis que l'axe auxiliaire plus court (E_{NA}), qui est conçu entre les sommets correspondants (S3, S4) de l'ellipse (E), s'étend de chaque ses extrémités uniquement jusqu'à une jonction entre l'évidement plat (2') et le bord d'évidement (3') conservé.

11. Moteur à combustion interne selon la revendication 1, **caractérisé en ce que** la jonction de l'évidement de piston (2') entre l'évidement de piston (2') et le bord d'évidement (3') de l'ellipse (E) est réalisée arrondie.

12. Procédé de combustion d'un moteur à combustion interne ayant au moins une des caractéristiques des revendications 1 à 11, où un déplacement de tourbillon transversal d'un écoulement d'une charge qui entre dans une chambre de combustion (B) pendant une course d'admission et la formation d'un cylindre de tourbillon transversal servant de déplacement de charge dans la chambre de combustion (B) est influencé en indiquant la direction d'écoulement de la charge en direction de l'au moins un canal d'échappement (AK) par
a1) une structure côté canal d'admission, une phase (F-EK ; F-EK', F-EK")) libérant l'ouverture de canal d'admission pour la charge de préférence en direction du canal d'échappement (AK) est conçu au niveau de l'ouverture de canal d'admission du canal d'admission (EK) et/ou
a2) le canal d'admission (EK) qui est aligné en soi en direction du canal d'échappement (AK), et
b) en orientant l'évidement elliptique (2') vis-à-vis de l'au moins un canal d'admission (EK) et vis-à-vis de l'au moins un canal d'échappement (AK) dans la tête de cylindre (11),
en disposant l'axe principal (E_{HA}) de l'ellipse (E) de l'évidement de piston (2') parallèlement à la position de l'axe de tourbillon transversal (T_{A}) du cylindre de tourbillon transversal, laquelle est formée par la direction d'écoulement de la charge dans la chambre de combustion (B), où la rupture de la turbulence du cylindre de tourbillon transversal conçu de la sorte commence dans la course de compression entre le fond de tête de cylindre (11A) droit conçu sous forme de toit de chambre de combustion servant de face inférieure de la tête de cylindre (11) et l'évidement de piston plat (2) dans une position prédéfinissable du piston de cylindre (1') à l'intérieur du cylindre (10) lors d'une différence d'angle de vilebrequin (ΔKW°) comprise entre 70° et 50° de préférence 60° avant le point mort haut d'allumage.
